# EUROPÄISCHE PATENTANMELDUNG

(11) **EP 2 775 477 A1**
(43) Veröffentlichungstag der Anmeldung: **10.09.2014**
(21) Anmeldenummer: 13075019.3
(22) Anmeldetag: 08.03.2013
(51) Int. Cl.: G11B 19/02, G06F 3/0488

(54) **Vorrichtung und Verfahren zur Präsentation von digitalen medialen Inhalten**

(71) Anmelder: zehndetails GmbH, 10719 Berlin (DE); Estensis GmbH, 13435 Berlin (DE)
(72) Erfinder: Diesbach, Jan, 13465 Berlin (DE); Gonschorr, Ossip, 16540 Hohe Neuendorf (DE); Benchekroun, Sami, 14057 Berlin (DE); Järvinen, Rauno, 10557 Berlin (DE); Weweler, Justus, 10627 Berlin (DE); Schneider, Christian, 16548 Glienicke (DE)
(74) Vertreter: Kietzmann, Manfred

(57) **Zusammenfassung**

Die Erfindung betrifft ein Verfahren zur Präsentation von digitalen medialen Inhalten auf einer Präsentationsvorrichtung mindestens aufweisend eine Eingabe- und Steuereinheit (1) mit einem Bildschirm (2) und Multi-Touch-Screen (3) und einen über die Eingabe- und Steuereinheit (1) digital ansteuerbaren Großbildschirm (4), der über ein Mittel (5) zur Daten- und Signalübertragung mit der Eingabe- und Steuereinheit (1) verbunden ist, wobei in der Eingabe- und Steuereinheit (1) mindestens eine Speichereinheit eingerichtet ist, in der mindestens ein elektronisches Dokument und/oder mindestens eine recherchierbare Datenbank gespeichert ist, die elektronische Dokumente enthält, und aus der einzelne elektronische Dokumente oder Gruppen von elektronischen Dokumenten per Eingabebefehle des Nutzers über das Multi-Touch-Screen (3) abrufbar und auf dem Bildschirm (2) der Eingabe- und Steuereinheit (1) anzeigbar sind, dadurch gekennzeichnet, dass durch Auswahl eines auf dem Bildschirm (2) der Eingabe- und Steuereinheit (1) angezeigten elektronischen Dokumentes oder eines Teilbereiches eines angezeigten elektronischen Dokumentes durch Ausführen von Berührungsgesten auf dem Multi-Touch-Screens (3) die Übertragung nur des ausgewählten elektronischen Dokumentes (6) oder des Teilbereiches des ausgewählten elektronischen Dokumentes auf den Großbildschirm (4) erfolgt und auf dem Großbildschirm (4) angezeigt wird, während zeitgleich und unabhängig von der Anzeige auf dem Großbildschirm weitere einzelne elektronische Dokumente oder Gruppen von elektronischen Dokumenten per Eingabebefehle oder Berührungsgesten des Nutzers über das Multi-Touch-Screen (3) aus einer Speichereinheit und/oder aus einer in einer Speichereinheit gespeicherten Datenbank abrufbar und auf dem Bildschirm (2) der Eingabe- und Steuereinheit (1) anzeigbar sind sowie eine Präsentationsvorrichtung.

## Beschreibung

Die Erfindung betrifft eine Vorrichtung und Verfahren zur Präsentation von digitalen medialen Inhalten.

Durch die rasante Weiterentwicklung von mobilen Rechnern, insbesondere von Tablet-PCs, sowie von Flachbildschirmen vollzieht sich im Bereich der Präsentationen von Vortragsinhalten oder anderweitigen wissenschaftlichen Inhalten eine Wandlung, indem die traditionellen Präsentationstechniken der Referenten mittels Overhead-Projektoren, Beamern oder gedruckten Postern sukzessive durch digitale Technologien abgelöst werden.

Insbesondere das gedruckte Poster stellt eins der wesentlichen Kommunikationsmedien des Kongresswesens dar, auf denen in Kurzform Forschungsprojekte, Technologien oder Fallstudien auf bedruckten Din-A0 Formaten in einem Ausstellungsbereich auf Stellwänden präsentiert werden.

Nachteilig daran ist, dass durch die räumliche Begrenzung von Ausstellungsräumen die Anzahl der präsentierbaren Druckposter limitiert ist.

Abhilfe schaffte die Entwicklung des e-Posters, welches mittlerweile bei Kongressen zum Einsatz kommt und ermöglicht, dass Interessierte in den Konferenzpausen an einem Terminal unterschiedliche Poster betrachten können. Hierbei handelt es sich in der Regel um Terminals mit großformatigen Flachbildschirmen, auf welchen die digitalisierten Poster wiedergegeben werden. Die Digitalisierung der Posterformate ermöglicht zudem die Einbettung von interaktiven Dateiformaten.

Die einfachste Technologie besteht aus einem Großbildschirm, auf dem in einer Endlosschleife wechselnde Poster für eine definierte Zeit angezeigt werden.

Bei neueren Technologien sind die e-Poster in Datenbanken abgespeichert und können vom Benutzer des Systems über einen Eingaberechner wie ein Notebook einzeln aufgerufen, ggfs. auf einem zweiten Monitor (Großbildschirm) angezeigt und nach Belieben betrachtet werden.

Durch die Einbindung von Multi-Touch-Screens und der damit einhergehenden Bedienung über Berührungsgesten ist die Nutzung derartiger Präsentationssystem noch komfortabler geworden, da diese durch einfache Fingerbewegungen auf dem Multi-Touch-Board eine Vielzahl von Bildanzeigefunktionen, wie das Vergrößern von Teilbereichen des e-Posters oder Aktivierung von eingebetteten Dateiformaten, ausgelöst werden können.

Nachteilig an den bekannten Systemen ist, dass die Technologie auf der 1:1 Spiegelung der Anzeige des Eingaberechners basiert, wodurch der Benutzer während der Benutzung direkt auf den Bildschirm des Eingaberechner schaut und von der Darstellung des Posters auf dem angeschlossenen Großbildschirm abgelenkt ist. Nachteilig ist auch, dass zuschauende Dritte jede Handlung des Nutzers am Eingaberechner auf dem Großbildschirm mit verfolgen können.

Auch birgt der Aufbau der bekannten Präsentationssystem Nachteile. Üblicherweise sind die Touch-Screens in ortsfesten Terminals integriert und in einem festen Abstand und in einer festen Höhe vor dem Bildschirm montiert, deren räumliche Ausrichtung sich daher nicht verändern lässt. Das führt dazu, dass der Referent während einer Posterpräsentation gezwungen ist, mit dem Rücken zum Publikum zu referieren. Zudem sind die bekannten Systeme für Rollstuhlfahrer oder kleinere Menschen nur unter großen Einschränkungen bedienbar.

Es ist daher die Aufgabe, einerseits dem Nutzer von derartigen Präsentationssystemen eine Privatsphäre zu schaffen, in welcher er ungestört und nahezu unbeobachtet suchen, filtern und recherchieren kann und andererseits ein Präsentationssystem bereitzustellen, welches kompakt, unabhängig von baulichen Gegebenheiten in den Ausstellungsräumen und flexibel ist und zusätzlich die Möglichkeit bietet, den Ort und die räumliche Ausrichtung des Eingabegerätes frei einstellen zu können.

Die Aufgabe wird mit einem Verfahren zur Präsentation von digitalen medialen Inhalten auf einer Präsentationsvorrichtung gelöst, bei dem die Präsentationsvorrichtung mindestens eine Eingabe- und Steuereinheit mit einem Bildschirm und Multi-Touch-Screen und einen über die Eingabe- und Steuereinheit digital ansteuerbaren Großbildschirm aufweist. Der Großbildschirm und die Eingabe- und Steuereinheit sind über ein Mittel zur Daten- und Signalübertragung miteinander verbunden.

In der Eingabe- und Steuereinheit ist mindestens eine Speichereinheit eingerichtet, in der mindestens ein elektronisches Dokument und/oder mindestens eine recherchierbare Datenbank gespeichert ist, die elektronische Dokumente enthält, und aus der einzelne elektronische Dokumente oder Gruppen von elektronischen Dokumenten per Eingabebefehle des Nutzers über das Multi-Touch-Screen abrufbar und auf dem Bildschirm der Eingabe- und Steuereinheit anzeigbar sind.

Das Verfahren zeichnet sich dadurch aus, dass durch Auswahl eines auf dem Bildschirm der Eingabe- und Steuereinheit angezeigten elektronischen Dokumentes oder eines Teilbereiches eines angezeigten elektronischen Dokumentes durch Ausführen von Berührungsgesten auf dem Multi-Touch-Screens die Übertragung nur des ausgewählten elektronischen Dokumentes oder des Teilbereiches des ausgewählten elektronischen Dokumentes auf den Großbildschirm erfolgt und auf dem Großbildschirm angezeigt wird, während zeitgleich und unabhängig von der Anzeige auf dem Großbildschirm weitere einzelne elektronische Dokumente oder Gruppen von elektronischen Dokumenten per Eingabebefehle oder Berührungsgesten des Nutzers über das Multi-Touch-Screen aus einer Speichereinheit und/oder aus einer in einer Speichereinheit gespeicherten Datenbank abrufbar und auf dem Bildschirm der Eingabe- und Steuereinheit anzeigbar sind.

Der Begriff "Elektronisches Dokument" definiert Dateiformate, die wahlweise oder in Kombination Texte, Bilder, Graphiken, Videos oder andere interaktive Inhalte enthalten. Vorzugsweise sind elektronische Dokumente im Sinn der Erfindung pdf-Formate, Powerpoint-Präsentationen, Word-Dateien, Excel-Dateien oder webbasierte Formate, ohne die Aufzählung abzuschließen. Bei den Inhalten des elektronischen Dokumentes handelt es insbesondere um interaktive Informationsanzeigen, multimediale Kurzpräsentation, Publikationen wissenschaftlicher Art, vorzugsweise wissenschaftliche Poster, oder auch mehrseitige Dokumente, beispielsweise Präsentationen zur Begleitung von Vorträgen oder Seminarbeiträgen. Alle genannten Formate liegen in digitalisierter Form vor.

Insbesondere ist das elektronische Dokument ein Verbunddokument, das mindestens ein animierbares oder interaktives Dateiformat enthält, dessen multimedialer Inhalt bei Anzeige des elektronischen Dokumentes auf dem Großbildschirm über Eingabebefehle in Form von Berührungsgesten auf dem Multi-Touch-Screen der Eingabe- und Steuereinheit, vorzugsweise über eine auf dem Multi-Touch-Screen angezeigten Interaktionsfläche, gesteuert werden.

Der Begriff Anzeige" beschreibt die aktuelle und bildschirmausfüllende Abbildung auf dem Bildschirm der Eingabe- und Steuereinheit oder auf dem Großbildschirm, je nachdem auf welches Bauteil Bezug genommen wird. Der Begriff umfasst auch Abfolgen von nacheinander folgenden bildschirmausfüllenden Abbildungen, beispielsweise durch Aufrufen neuer Inhalte oder Scrollen.

Berührungsgesten sind definierte Fingerbewegung auf dem Multi-Touch-Screen, wobei jeder Fingerbewegung ein bestimmter Eingabebefehl zugeordnet ist.

In einer besonderen Ausführungsform verfügt die erfindungsgemäße Präsentationsvorrichtung über eine Verbindung zum Internet, wodurch ein Zugriff des Nutzers auch auf Webseiten oder andere im Internet aufrufbare Inhalte möglich ist und diese auf dem Großbildschirm darstellbar und über die Eingabe- und Steuereinrichtung ansteuerbar sind.

Ebenso können Anschlüsse und Leitungen zu Druckern oder anderen Peripherie-Geräten eingerichtet sein.

Durch die Digitalisierung der Publikationen in Form von elektronischen Dokumenten eröffnen sich damit weitere relevante Nutzungsmöglichkeiten. Die Nutzer können die elektronischen Dokumente in kleineren Formaten ausdrucken oder sich per Mail eine Kopie zukommen lassen.

Der Begriff "Eingabe -und Steuereinheit mit Bildschirm und Multi-Touch-Screen" umfasst insbesondere Tablet-PCs, Smartphones, mobile Telefone mit Touchscreen, Monitore mit Touchscreen.

Eine der in der erfindungsgemäßen Präsentationsvorrichtung verwendeten Software basiert auf einem nativen iOS PDF Framework, welches es ermöglicht, PDF-Dateien mit Videos, Audio und HTML zu erweitern. Dazu werden bestimmte Bereiche in der PDF definiert und diesem multimediale Inhalt zugewiesen. Beim Anschauen des PDFs erkennt die Software den Bereich und lädt den zugehörigen Inhalt automatisch. Dem entsprechend ist es nunmehr möglich derartige Dokumente wie Poster mit multimedialem Inhalt zu versehen.

Der grundlegende Aufbau des softwaregesteuerten Programms auf der Eingabe- und Steuereinheit bietet zunächst einen Überblick über alle vorhandenen elektronischen Dokumente. Angezeigt werden dokumentenspezifische Daten wie beispielsweise bei Posterpräsentationen die Posternummer, der Postertitel, der Name des Autors sowie eine Vorschau (»Thumbnail«). Diese Datenpakete können mit Hilfe von Berührungsgesten auf dem Multi-Touch-Screen durchblättert werden. Buttons zum Scrollen entfallen komplett. Zusätzlich lassen sich die elektronischen Dokumente nach verschiedenen Kategorien filtern, welche im Voraus vom Nutzer definiert und eingegeben werden können. Zum weiteren Verfeinern der Suchbegriffe steht darüber hinaus eine Volltextsuche zur Verfügung, bei der die Suchergebnisse in Echtzeit angezeigt werden. Dieser Modus wird im weiteren "Recherchemodus" benannt.

Während des Recherchemodus ist die Anzeige auf dem Bildschirm der Eingabe- und Steuereinheit auf dem Großbildschirm nicht angezeigt und somit nach außen für Dritte nicht sichtbar. Der Großbildschirm kann entweder im Zustand "Stand By" geschaltet sein oder es können dort während des Recherchemodus bereits aufgerufene elektronische Dokumente oder andere multimediale Inhalte, die individuell programmierbar sind, auf dem Großbildschirm angezeigt sein. Derartige multimediale Inhalte können beispielsweise Videos oder Firmenkennzeichen, insbesondere Werbeinformationen sein.

Wird nun auf der Eingabe- und Steuereinheit ein elektronisches Dokument ausgewählt und durch eine definierte Berührungsgeste auf dem Multi-Touch-Screen die Übertragung auf den Großbildschirm gestartet, erfolgt auf dem Großbildschirm eine vollflächige Wiedergabe (Anzeige) nur und ausschließlich des ausgewählten elektronischen Dokumentes, vorzugsweise im Portrait Mode.

Die Veränderung der Großbildschirmanzeige erfolgt über die Ausübung von Berührungsgesten auf dem Multi-Touch-Screen der Eingabe- und Steuereinheit die Darstellung der Anzeige und/oder die Auswahl von Teilbereichen der Anzeige des elektronischen Dokumentes auf dem Großbildschirm eingestellt wird.

Auf der Eingabe- und Steuereinheit, vorzugsweise im Landscape Mode, wird zeitgleich zur Anzeige des ausgewählten elektronischen Dokumentes auf dem Großbildschirm mittig eine Interaktionsfläche für das ausgewählte und auf dem Großbildschirm wiedergegebene elektronischen Dokument anzeigt, auf der die Funktionsbefehle in Form von Berührungsgesten ausgeführt werden, um den Großbildschirm anzusteuern und die Anzeige auf dem Großbildschirm zu verändern.

Derartige Funktionsbefehle können beispielsweise das Einzoomen von Teilbereichen des ausgewählten elektronischen Dokumentes oder dessen Verschieben sein. Wesentlich ist, dass die Steuerung der Bildanzeige auf dem Großbildschirm über die Interaktionsfläche auf dem Multi-Touch-Screen der Eingabe- und Steuereinheit erfolgt, ohne dass die ausgeführten Aktionen (Folge eines Funktionsbefehls) auf dem Bildschirm der Eingabe-und Steuereinheit in Form einer 1:1 Spiegelung der Anzeige auf dem Großbildschirm sichtbar sind.

Auch kann die Anzeige der Interaktionsfläche über einen Eingabebefehl verlassen und zum Recherchemodus zurückgekehrt werden, ohne dass die aktuelle Anzeige des Großbildschirms verändert wird. Ebenso kann von einem Recherchemodus zu der Interaktionsfläche des auf dem Großbildschirm angezeigten elektronischen Gerätes über einen Eingabebefehl zurückgekehrt werden, um die Anzeige auf dem Großbildschirm anzusteuern.

In einer weiteren Ausführungsform können an den Rändern der Interaktionsfläche das vorherige und nachfolgende elektronische Dokument anzeigt sein.

Eine von vielen möglichen auf der Interaktionsfläche ausübbaren Funktionen ist beispielsweise die Zoomfunktion. Die Zoomfunktion unterstützt dabei sowohl »Pinch to Zoom«, als auch intelligentes Zoomen, das beim Doppeltippen mit einem Finger auf einen bestimmten Bereich vergrößert.

Eine weitere Funktion ist die Wischbewegung über den Multi-Touch-Screen, mit der direkt innerhalb dieser Bildschirmanzeige der Eingabe- und Steuereinheit zwischen den elektronischen Dokumenten gewechselt wird.

In einer weiteren Ausführungsform sieht das Verfahren vor, dass die in der mindestens einen Speichereinheit gespeicherte mindestens eine Datenbank mit der in einem Zentralrechner gespeicherten korrespondierenden Datenbank, vorzugsweise in einem vorgegebenen Zeitintervall, synchronisiert wird.

Durch die zentrale Speicherung der Datenbanken oder einzelner elektronischer Dokumente in einem Zentralrechner kann der Speicherinhalt einer Präsentationsvorrichtung aktualisiert werden, ohne dass der Betrieb der Präsentationsvorrichtung unterbrochen werden muss. Zudem können die Speicherinhalte mehrere Präsentationsvorrichtungen parallel und unabhängig voneinander aktualisiert und angeglichen werden. Vorzugsweise erfolgt die Einspeisung der elektronischen Dokumente nur in die Speichereinheit des Zentralrechners.

Desweiteren ist der Verfahrensschritt vorgesehen, dass die Anzeige eines ersten elektronischen Dokumentes oder eines Teilbereiches eines ersten angezeigten elektronischen Dokumentes auf dem Großbildschirm beendet wird, indem durch Auswahl eines auf dem Bildschirm der Eingabe- und Steuereinheit angezeigten zweiten elektronischen Dokumentes oder eines Teilbereiches eines angezeigten zweiten elektronischen Dokumentes durch Ausführen von Berührungsgesten auf dem Multi-Touch-Screens die Übertragung des ausgewählten zweiten elektronischen Dokumentes oder des Teilbereiches des ausgewählten zweiten elektronischen Dokumentes auf den Großbildschirm gestartet wird.

Findet der Nutzer der Präsentationsvorrichtung nun im Recherchemodus der Eingabe- und Steuereinheit ein zweites elektronisches Dokument von Interesse kann er die aktuelle Anzeige auf dem Großbildschirm beenden, indem er durch beispielsweise Antippen des zweiten elektronischen Dokumentes auf dem Multi-Touch-Screen die Übertragung dieses Dokumentes auf den Großbildschirm startet, worauf die Anzeige des ersten Dokumentes auf dem Großbildschirm geschlossen und das zweite elektronische Dokument angezeigt wird. In einer bevorzugten Ausführung öffnet sich gleichzeitig auf dem Multi-Touch-Screen der Eingabe- und Steuereinheit eine Interaktionsfläche, mit der die Bildschirmanzeige des zweiten elektronischen Dokumentes auf dem Großbildschirm gesteuert werden kann.

Alternativ kann die Anzeige eines elektronischen Dokumentes oder eines Teilbereiches eines angezeigten elektronischen Dokumentes auf dem Großbildschirm beendet werden, indem auf dem Multi-Touch-Screen ein Anzeigebeendigungssteuerfeld betätigt oder eine definierte Berührungsgesten ausgeübt wird, insbesondere auf der der Anzeige des elektronischen Dokumentes zugeordneten Interaktionsfläche des Multi-Touch-Screens.

In Folge dieses Eingabebefehls wird die Anzeige des elektronischen Dokumentes oder eines Teilbereiches eines angezeigten elektronischen Dokumentes auf dem Großbildschirm beendet. Der Großbildschirm kann mit Beenden der Anzeige gleichzeitig in den Zustand "Stand by" geschalten werden.

Alternativ kann mit diesem Eingabebefehl zur Beendigung der Anzeige zeitgleich ein individuell programmierbares Bildschirmschonerprogramm, welches nur auf dem Großbildschirm, aber nicht auf der Bildschirmanzeige der Eingabe- und Steuereinheit sichtbar ist, gestartet werden.

Der Begriff "Bildschirmschonerprogramm" steht für ein Programm, welches dazu führt, dass auf dem Großbildschirm individuell programmierbare multimediale Inhalte angezeigt werden. Derartige multimediale Inhalte können beispielsweise Standbilder oder Videosequenzen sein. Zur Repräsentation von Sponsoren oder Veranstaltern können diese Inhalte insbesondere Firmenkennzeichen, Firmenpräsentationen oder Werbeinformationen sein.

Bei einer dritten Alternative kann nach Beendigung der Anzeige auf dem Großbildschirm nach den genannten Verfahrensschritten eine Spiegelung der Bildschirmanzeige der Eingabe- und Steuereinheit auf dem Großbildschirm gestartet und dort angezeigt werden.

Für die Veranstalter und Teilnehmer von Präsentationsveranstaltungen wie Konferenzen oder Ausstellungen besteht oftmals ein Interesse, welche Publikationen, insbesondere im Bereich von Posterpräsentationen, wie oft und wie lange betrachtet wurden, um daraus Rückschlüsse beispielsweise über die Attraktivität, Aktualität oder Güte der Publikation treffen zu können. Eine solche Datenerhebung ist bei traditionellen Präsentationsveranstaltungen, die sich der klassischen Druckgraphiken bedienen, nur durch Beobachtung und Schätzung möglich.

Zur Erfassung von derartigen statistischen Daten betreffend die Nutzung der Präsentationsvorrichtung ist in die Eingabe-und Steuereinheit ein Datenerfassungsprogramm integriert, welches Nutzungsdaten und das Nutzungsverhalten von Nutzern erfasst. Beispielsweise können derartige Nutzungsdaten die Anzahl und/oder Dauer von Aufrufen eines elektronischen Dokumentes oder einer Gruppe von elektronischen Dokumenten betreffen, wobei diese Daten von der Eingabe- und Steuereinrichtung aufzeichnet und vorzugsweise auch auf der der Eingabe- und Steuereinrichtung auswertet und ausgegeben werden können.

Werden mehrere Präsentationsvorrichtungen parallel betrieben, kann die von der Eingabe- und Steuereinheit einer jeden Präsentationsvorrichtung erfassten statistischen Daten an einen Zentralrechner weitergeleitet werden, dort gesammelt, vereinigt, verarbeitet und abrufbar gespeichert werden.

Zur Lösung der Aufgabe wird auch eine Präsentationsvorrichtung für digitale mediale Inhalte vorgeschlagen, auf der insbesondere das erfindungsgemäße Verfahren ausführbar ist.

Die Präsentationsvorrichtung weist mindestens ein Trägergestell mit einem daran befestigten, über eine Eingabe-und Steuereinheit digital ansteuerbaren Großbildschirm und einen mit dem Trägergestell verbundenen Tragarm, an dem endseitig die Eingabe- und Steuereinheit mit einem Bildschirm und Multi-Touch-Screen eingerichtet ist, auf, wobei der digital ansteuerbare Großbildschirm über ein Mittel zur Daten-und Signalübertragung mit der Eingabe- und Steuereinheit verbunden ist.

In der Eingabe- und Steuereinheit ist mindestens eine Speichereinheit eingerichtet, in der mindestens ein elektronisches Dokument und/oder mindestens eine recherchierbare Datenbank gespeichert ist, die elektronische Dokumente enthält, und aus der einzelne elektronische Dokumente oder Gruppen von elektronischen Dokumenten per Eingabebefehle des Nutzers über das Multi-Touch-Screen abrufbar und auf dem Bildschirm der Eingabe- und Steuereinheit anzeigbar sind.

Durch Auswahl eines auf dem Bildschirm der Eingabe- und Steuereinheit angezeigten elektronischen Dokumentes oder eines Teilbereiches eines angezeigten elektronischen Dokumentes durch Ausführen von Berührungsgesten auf dem Multi-Touch-Screens ist die Übertragung nur des ausgewählten elektronischen Dokumentes oder des ausgewählten Teilbereiches des angezeigten elektronischen Dokumentes auf den Großbildschirm auslösbar und auf dem Großbildschirm anzeigbar, während zeitgleich und unabhängig von der Anzeige auf dem Großbildschirm weitere einzelne elektronische Dokumente oder Gruppen von elektronischen Dokumenten per Eingabebefehle oder Berührungsgesten des Nutzers über das Multi-Touch-Screen aus einer Speichereinheit und/oder aus einer in einer Speichereinheit gespeicherten Datenbank abrufbar und auf dem Bildschirm der Eingabe- und Steuereinheit anzeigbar sind.

In der einfachsten Ausführungsform der erfindungsgemäßen Präsentationsvorrichtung besteht das Trägergestell aus einem Edelstahlständer mit Standfuß, an dem der Großbildschirm befestigt ist. Im Gegensatz zu den bekannten Präsentationssystemen, bei denen die Großbildschirme in der Regel an Tragwänden befestigt sind, vor denen die fest mit dem Boden verankerten Bedienterminals stehen, ist die erfindungsgemäße Präsentationsvorrichtung unabhängig von den vorgegebene baulichen Gegebenheiten. Zudem kann diese aufgrund ihrer freistehenden, kompakten und leichten Bauweise einfach verrückt oder umgestellt werden.

Vorzugsweise ist der Großbildschirm über eine höhenverstellbare Halterung mit dem Trägergestell verbunden, so dass die Höhe des Großbildschirms individuell einstellbar ist.

In einer vorteilhaften Ausführungsform ist der Tragarm schwenkbar, vorzugsweise horizontal schwenkbar, mit dem Trägergestell verbunden ist. Für schnelle Auf- und Umbaumaßnahmen kann der Tragarm lösbar mit dem Trägergestell verbunden sein. Auch kann der Tragarm in der Höhe verstellbar eingerichtet sein.

In einer weiteren vorteilhaften Ausführungsform ist der Schwenkbereich des Tragarms durch Anschläge am Trägergestell räumlich begrenzt. Vorzugsweise umfasst der Schwenkbereich einen Winkel von maximal 180°.

Durch die Einrichtung eines schwenkbaren Tragarms ist es dem Referenten/Nutzer möglich, die an dem Tragarm eingerichtet Eingabe- und Steuereinheit durch Ausführen einer seitlichen Schwenkbewegung des Tragarms aus dem Frontalbereich des Großbildschirms heraus zu bewegen und somit die Sicht auf den Großbildschirm freizugeben. Gleichzeitig kann sich der Referent/Nutzer während seiner Präsentation dem Publikum zuwenden und nahezu frontal mit dem Publikum korrespondieren, während er direkt vor der Eingabe- und Steuereinheit steht, mit der er die Präsentation seiner elektronischen Dokumente steuert.

Beispielsweise sind die Bemaßungen zwischen Tragarm, Trägergestell- und Eingabe- und Steuereinheit derart bemessen, dass sich die Eingabe- und Steuereinheit im montierten Zustand in einer Höhe von ca. 100 cm befindet, wobei es ebenfalls ca. 100 cm vom Großbildschirm entfernt ist. Diese Abmessungen ermöglichen eine optimale Bedienbarkeit bei gleichzeitiger Einhaltung eines angenehmen Abstands zum Großbildschirm, wie Tests mit Nutzern ergaben.

Die erfindungsgemäße Präsentationsvorrichtung zeichnet sich zudem durch klare Linienführung und ein schlichtes funktionales Design aus, das die Hardware in den Hintergrund rücken lässt und den Fokus des Nutzers auf den angezeigten Inhalt lenkt.

In einer weiteren Ausführungsform sind Tragarm und Trägergestell teilweise aus Hohlprofilen gefertigt, durch die notwendige Verbindungsleitungen zwischen den an der Präsentationsvorrichtung eingerichteten Geräten wie dem Großbildschirm und der Eingabe- und Steuereinheit von außen unsichtbar und gesichert vor Zugriffen in den Hohlprofilen geführt werden können.

Vorteilhafter Weise ist die Eingabe- und Steuereinheit über eine Halterung mit dem Tragarm verbunden. Diese Halterung umfasst mindestens ein dreh- und/oder kippbewegliches Gelenk, vorzugsweise in einer Edelstahlfassung.

Die Drehbeweglichkeit, die vorzugsweise auf einen Drehwinkel in der Drehebene von 90° ± 10° begrenzt ist, dient dem Schwenken der Eingabe- und Steuereinheit von einer ersten Stellung, beispielsweise einem Hochformat des Bildschirms, in eine zweite Stellung, vorzugsweise einem Querformat des Bildschirms, und umgekehrt.

Durch die Einrichtung und Bereitstellung einer Kippbeweglichkeit der Halterung kann die auf der Halterung befestigte Eingabe- und Steuereinrichtung in, vorzugsweise vertikaler Richtung, gekippt werden, um den Bildschirm und das Multi-Touch-Screen in eine für den Nutzer komfortable Arbeitsposition zu bringen.

Vorzugsweise ist die Halterung mit dem Tragarm lösbar verbunden. Desweiteren kann in der Halterung eine Arretierungsvorrichtung eingerichtet sein, mit dem das Lösen der Halterung vom Tragarm zeitweise unterbunden werden kann.

In einer weiteren Ausführungsform ist das Präsentationssystem mit einem Mikrofon und/oder einer Audioanlage ausgestattet.

Der Verstärker der Audioanlage ist vorzugsweise auf der Rückseite des Großbildschirms montiert. Der oder die Lautsprecher ragen dabei sichtbar über den Großbildschirm hinaus.

Ein oder mehrere Mikrofone sind vorzugsweise auf oder an dem Tragarm in der Nähe der Eingabe- und Steuereinrichtung eingerichtet.

Es hat sich herausgestellt, dass eine Präsentation in der traditionellen Größe von Druckpostern, in der Regel DIN A0, besonders gut für den Transport von Informationen geeignet ist. Dies ist daran begründet, dass einerseits Kongress- und Ausstellungsteilnehmer an dieses Format gewöhnt sind und andererseits dieses Format ausreichend Platz für Inhalte bietet, die jedoch in kurzer Zeit erfasst werden können. Zur Erzeugung einer, dem Druckposters äquivalenten Anzeige ist daher die Präsentationsvorrichtung in einer besonderen mit einem Großbildschirm mit einer Bildschirmgröße gleich oder größer dem Format DIN A0 ausgestattet.

Bei der Verwendung einer W-LAN- oder internetfähigen Eingabe-und Steuereinheit oder eines entsprechenden Zentralrechners können externe Rechner wie Tablet-PCs oder Notebooks als »Second Screen Experience« genutzt werden. Deren Nutzer können von einem beliebigen Ort, beispielsweise in Distanz zur Präsentationsvorrichtung, aber auch von außerhalb des Veranstaltungsortes, beispielsweise von Zuhause oder vom Hotelzimmer aus an der gewünschten Präsentation teilnehmen.

Nachstehend wir die Erfindung anhand eines Ausführungsbeispiels näher erläutert. Die Figuren zeigen:
- Fig. 1:: Seitenansicht einer Präsentationsvorrichtung,
- Fig. 2:: räumliche Ansicht einer Präsentationsvorrichtung.

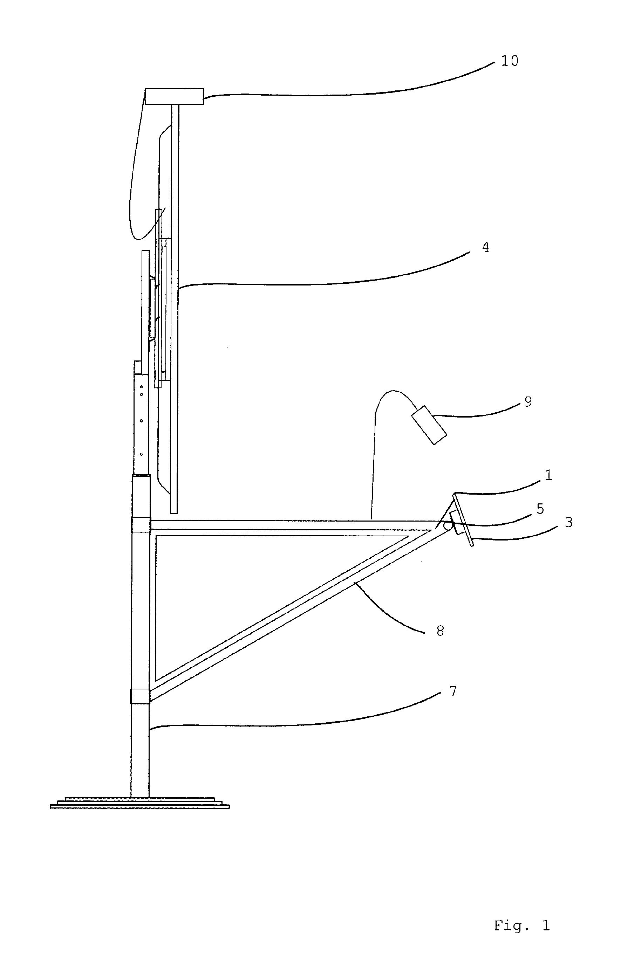

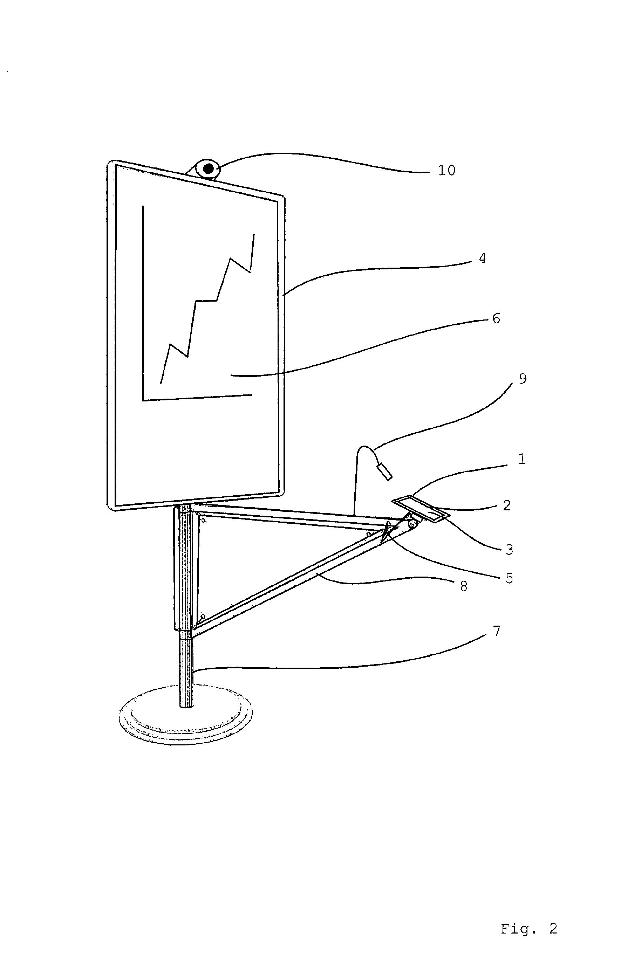

Die Figuren 1 und 2 zeigt eine Präsentationsvorrichtung für digitale mediale Inhalte mit einem Trägergestell 7 mit einem Standfuß und einem daran befestigten digital über eine Eingabe- und Steuereinheit 1 ansteuerbaren Großbildschirm 4 sowie einem mit dem Trägergestell 7 verbundenen Tragarm 8. Endseitig am Tragarm 8 ist die Eingabe- und Steuereinheit 1 mit einem Bildschirm 2 und Multi-Touch-Screen 3 eingerichtet und der digital ansteuerbare Großbildschirm 4 ist über ein Mittel 5 zur Daten- und Signalübertragung, hier ein Leitungskabel, mit der Eingabe- und Steuereinheit 1 verbunden.

Auf dem Großbildschirm 4 ist ein elektronisches Dokument 6 angezeigt, dass aus einer Speichereinheit der Eingabe- und Steuereinheit 1 abgerufen und per Eingabebefehl in Form von Berührungsgesten auf dem Multi-Touch-Screen 3 auf den Großbildschirm 4 übertragen worden ist.

Der Tragarm 8 ist mit der Eingabe- und Steuereinheit 1 schwenkbar mit dem Trägergestell 7 verbunden und die Eingabe-und Steuereinheit 1 ist dreh- und kippbeweglich über eine Halterung mit einem Drehgelenk und einem Kippgelenk mit dem Tragarm 8 verbunden.

Am Tragarm 8 ist ein Mikrofon 9 eingerichtet. Oberhalb des Großbildschirms 4 befindet sich ein Lautersprecher 10 zur Übertragung von Sprache oder Audioformaten.

## Patentansprüche

1. Verfahren zur Präsentation von digitalen medialen Inhalten auf einer Präsentationsvorrichtung mindestens aufweisend eine Eingabe- und Steuereinheit (1) mit einem Bildschirm (2) und Multi-Touch-Screen (3) und einen über die Eingabe- und Steuereinheit (1) digital ansteuerbaren Großbildschirm (4), der über ein Mittel (5) zur Daten-und Signalübertragung mit der Eingabe- und Steuereinheit (1) verbunden ist, wobei in der Eingabe- und Steuereinheit (1) mindestens eine Speichereinheit eingerichtet ist, in der mindestens ein elektronisches Dokument und/oder mindestens eine recherchierbare Datenbank gespeichert ist, die elektronische Dokumente enthält, und aus der einzelne elektronische Dokumente oder Gruppen von elektronischen Dokumenten per Eingabebefehle des Nutzers über das Multi-Touch-Screen (3) abrufbar und auf dem Bildschirm (2) der Eingabe- und Steuereinheit (1) anzeigbar sind, **dadurch gekennzeichnet, dass**
durch Auswahl eines auf dem Bildschirm (2) der Eingabe-und Steuereinheit (1) angezeigten elektronischen Dokumentes oder eines Teilbereiches eines angezeigten elektronischen Dokumentes durch Ausführen von Berührungsgesten auf dem Multi-Touch-Screens (3) die Übertragung nur des ausgewählten elektronischen Dokumentes (6) oder des Teilbereiches des ausgewählten elektronischen Dokumentes auf den Großbildschirm (4) erfolgt und auf dem Großbildschirm (4) angezeigt wird, während zeitgleich und unabhängig von der Anzeige auf dem Großbildschirm weitere einzelne elektronische Dokumente oder Gruppen von elektronischen Dokumenten per Eingabebefehle oder Berührungsgesten des Nutzers über das Multi-Touch-Screen (3) aus einer Speichereinheit und/oder aus einer in einer Speichereinheit gespeicherten Datenbank abrufbar und auf dem Bildschirm (2) der Eingabe- und Steuereinheit (1) anzeigbar sind.

2. Verfahren nach Anspruch 1, **dadurch gekennzeichnet, dass**
die in der mindestens einen Speichereinheit gespeicherte mindestens eine Datenbank mit der in einem Zentralrechner gespeicherten korrespondierenden Datenbank, vorzugsweise in einem vorgegebenen Zeitintervall, synchronisiert wird.

3. Verfahren nach Anspruch 1 oder 2, **dadurch gekennzeichnet, dass**
über die Ausübung von Berührungsgesten auf dem Multi-Touch-Screen (3) der Eingabe- und Steuereinheit (1) die Darstellung der Anzeige (6) und/oder die Auswahl von Teilbereichen der Anzeige des elektronischen Dokumentes auf dem Großbildschirm (4) eingestellt wird.

4. Verfahren einem der Ansprüche 1 bis 3, **dadurch gekennzeichnet, dass**
das elektronische Dokument ein Verbunddokument ist, das mindestens ein animierbares oder interaktives Dateiformat enthält, dessen multimedialer Inhalt bei Anzeige (6) des elektronischen Dokumentes auf dem Großbildschirm (4) über Eingabebefehle in Form von Berührungsgesten auf dem Multi-Touch-Screen (3) der Eingabe- und Steuereinheit (1) gesteuert werden.

5. Verfahren nach einem der Ansprüche 1 bis 4, **dadurch gekennzeichnet, dass**
die Anzeige (6) eines ersten elektronischen Dokumentes oder eines Teilbereiches eines ersten angezeigten elektronischen Dokumentes auf dem Großbildschirm (4) beendet wird, indem durch Auswahl eines auf dem Bildschirm (2) der Eingabe- und Steuereinheit (1) angezeigten zweiten elektronischen Dokumentes oder eines Teilbereiches eines angezeigten zweiten elektronischen Dokumentes durch Ausführen von Berührungsgesten auf dem Multi-Touch-Screens (3) die Übertragung des ausgewählten zweiten elektronischen Dokumentes oder des Teilbereiches des ausgewählten zweiten elektronischen Dokumentes auf den Großbildschirm (4) gestartet wird.

6. Verfahren nach einem der Ansprüche 1 bis 4, **dadurch gekennzeichnet, dass**
die Anzeige (6) eines elektronischen Dokumentes oder eines Teilbereiches eines angezeigten elektronischen Dokumentes auf dem Großbildschirm (4) durch Betätigen eines Anzeigebeendigungssteuerfeldes auf dem Multi-Touch-Screen (3) und/oder durch Ausüben einer definierte Berührungsgeste beendet wird.

7. Verfahren nach Anspruch 6, **dadurch gekennzeichnet, dass**
nach Beendigung der Anzeige (6) eines elektronischen Dokumentes oder eines Teilbereiches eines angezeigten elektronischen Dokumentes auf dem Großbildschirm (4) durch Betätigen eines Anzeigebeendigungssteuerfeldes auf dem Multi-Touch-Screen (3) ein individuell programmierbares Bildschirmschonerprogramm, welches nur auf dem Großbildschirm (4), aber nicht auf dem Bildschirm (2) der Eingabe- und Steuereinheit (1) sichtbar ist, gestartet wird oder eine Spiegelung der Bildschirmanzeige (2) der Eingabe- und Steuereinheit (1) auf dem Großbildschirm (4) angezeigt wird.

8. Verfahren einem der Ansprüche 1 bis 7, **dadurch gekennzeichnet, dass**
das elektronische Dokument eine digitalisierte interaktive Informationsanzeigen, eine digitalisierte multimediale Kurzpräsentation, eine digitalisierte Publikation wissenschaftlicher Art, ein digitalisiertes wissenschaftliches Poster, ein mehrseitiges digitales Dokumente oder eine Webseite ist.

9. Verfahren einem der Ansprüche 1 bis 8, **dadurch gekennzeichnet, dass**
eine Erfassung von statistischen Daten in Bezug auf die Nutzung der Präsentationsvorrichtung, vorzugsweise betreffend die Anzahl und/oder Dauer von Aufrufen eines elektronischen Dokumentes oder einer Gruppe von elektronischen Dokumenten, erfolgt, wobei diese Daten von der Eingabe- und Steuereinrichtung (1) erfasst werden.

10. Verfahren nach Anspruch 9, **dadurch gekennzeichnet, dass**
die von der Eingabe- und Steuereinheit (1) erfassten statistischen Daten an einen Zentralrechner weitergeleitet werden, dort gesammelt, verarbeitet und abrufbar gespeichert werden.

11. Präsentationsvorrichtung für digitale mediale Inhalte mindestens aufweisend
ein Trägergestell (7) mit einem daran befestigten digital über eine Eingabe- und Steuereinheit (1) ansteuerbaren Großbildschirm (4) und einem mit dem Trägergestell (7) verbundenen Tragarm (8), an dem endseitig die Eingabe-und Steuereinheit (1) mit einem Bildschirm (2) und Multi-Touch-Screen (3) eingerichtet ist, wobei der digital ansteuerbare Großbildschirm (4) über ein Mittel (5) zur Daten- und Signalübertragung mit der Eingabe- und Steuereinheit (1) verbunden ist,
wobei in der Eingabe- und Steuereinheit (1) mindestens eine Speichereinheit eingerichtet ist, in der mindestens ein elektronisches Dokument und/oder mindestens eine recherchierbare Datenbank gespeichert ist, die elektronische Dokumente enthält, und aus der einzelne elektronische Dokumente (6) oder Gruppen von elektronischen Dokumenten per Eingabebefehle des Nutzers über das Multi-Touch-Screen (3) abrufbar und auf dem Bildschirm (2) der Eingabe- und Steuereinheit (1) anzeigbar sind und
wobei durch Auswahl eines auf dem Bildschirm (2) der Eingabe- und Steuereinheit (1) angezeigten elektronischen Dokumentes oder eines Teilbereiches eines angezeigten elektronischen Dokumentes durch Berührung des Multi-Touch-Screens (3) die Übertragung nur des ausgewählten elektronischen Dokumentes (6) oder des ausgewählten Teilbereiches des angezeigten elektronischen Dokumentes auf den Großbildschirm (4) auslösbar und auf dem Großbildschirm (4) anzeigbar ist, während zeitgleich und unabhängig von der Anzeige (6) auf dem Großbildschirm weitere einzelne elektronische Dokumente oder Gruppen von elektronischen Dokumenten per Eingabebefehle oder Berührungsgesten des Nutzers über das Multi-Touch-Screen (3) aus einer Speichereinheit und/oder aus einer in einer Speichereinheit gespeicherten Datenbank abrufbar und auf dem Bildschirm (2) der Eingabe- und Steuereinheit (1) anzeigbar sind.

12. Präsentationsvorrichtung für digitale mediale Inhalte nach Anspruch 11, **dadurch gekennzeichnet, dass**
der Tragarm (8) mit der Eingabe- und Steuereinheit (1) schwenkbar mit dem Trägergestell (7) verbunden ist.

13. Präsentationsvorrichtung für digitale mediale Inhalte nach Anspruch 11 oder 12, **dadurch gekennzeichnet, dass**
die Eingabe- und Steuereinheit (1) dreh- und/oder kippbeweglich mit dem Tragarm (8) verbunden ist.

14. Präsentationsvorrichtung für digitale mediale Inhalte nach einem der Ansprüche 11 bis 13, **dadurch gekennzeichnet, dass**
das Präsentationssystem mit mindestens einem Mikrofon (9) und/oder mindestens einer Audioanlage (10) ausgestattet ist.

15. Präsentationsvorrichtung für digitale mediale Inhalte nach einem der Ansprüche 11 bis 14, **dadurch gekennzeichnet, dass**
die Bildschirmgröße des Großbildschirms (4) gleich oder größer dem Format DIN A0 ist.
